# FASCICULE DE BREVET EUROPEEN

(11) **EP 4 101 723 B1**
(45) Date de publication et mention de la délivrance du brevet: **01.11.2023**
(21) Numéro de dépôt: 22178018.2
(22) Date de dépôt: 09.06.2022
(51) Int. Cl.: B61D 33/00, B60N 2/20, B60N 2/32, B61D 37/00

(54) **AMÉNAGEMENT POUR VÉHICULE DE TRANSPORT CONVERTIBLE ENTRE UN ESPACE PASSAGERS ET UN ESPACE BAGAGES, MÉTHODES DE CONVERSION D'UN TEL AMÉNAGEMENT ET VÉHICULE COMPRENANT UN TEL AMÉNAGEMENT**
AUSSTATTUNG FÜR EIN TRANSPORTFAHRZEUG, DIE ZWISCHEN EINEM FAHRGASTRAUM UND EINEM GEPÄCKRAUM UMWANDELBAR IST, VERFAHREN ZUR UMWANDLUNG EINER SOLCHEN AUSSTATTUNG UND FAHRZEUG MIT EINER SOLCHEN AUSSTATTUNG
ARRANGEMENT FOR A TRANSPORT VEHICLE CONVERTIBLE BETWEEN A PASSENGER SPACE AND A LUGGAGE SPACE, METHODS FOR CONVERTING SUCH AN ARRANGEMENT AND VEHICLE INCLUDING SUCH AN ARRANGEMENT

(30) Priorité: 11.06.2021 FR 2106182
(43) Date de publication de la demande: 14.12.2022
(73) Titulaire: SpeedInnov, 75008 Paris (FR)
(72) Inventeur: BERNARD, Alexandre, 17340 Châtelaillon Plage (FR); BEAUSEIGNEUR, Christophe, 17540 Fontpatour de Vérines (FR)
(74) Mandataire: Lavoix

(56) Documents cités:
- WO-A1-2008/092382
- WO-A1-2011/077364
- WO-A1-2013/166390
- FR-A1- 2 952 889
- FR-A1- 3 022 862
- US-B2- 9 126 689

## Description

La présente invention concerne un aménagement pour véhicule de transport convertible entre un espace passagers et un espace bagages.

Dans le domaine du transport de passagers, il est connu de proposer dans un véhicule des aménagements dédiés au stockage de bagages et des aménagements dédiés au transport des passagers. Dans un véhicule ferroviaire, par exemple, une voiture peut comporter plusieurs aménagements de chaque type. Ces aménagements présentent l'inconvénient de ne pas être modulaires, car un aménagement d'un premier type ne peut pas être transformé en un aménagement d'un second type sans opérations de maintenance spécifique du véhicule. Il est donc difficile, voire impossible en pratique, d'adapter la configuration d'une voiture à la clientèle, qui peut voyager avec plus ou moins de bagages, selon la ligne ou selon la saison.

Il est également connu de WO-A-1 2011 077 364 de prévoir un aménagement pour un véhicule de transport de passagers, cet aménagement étant convertible entre une première configuration présentant deux paires de sièges en vis-à-vis et un espace de rangement situé au-dessus de ces sièges et une seconde configuration présentant un espace lit permettant à un passager de s'allonger, l'espace lit étant constitué de la structure de l'espace rangement de la première configuration après translation vers le bas de cet espace et allongement des sièges. Cette solution présente l'inconvénient de proposer un faible volume de stockage dans l'espace de rangement, et un stockage peu accessible car situé en hauteur, empêchant par exemple d'y placer une valise de poids important.

Il est également connu de FR-A-2 952 889 de prévoir une voiture ferroviaire comprenant un siège comportant une assise fixe, un dossier fixe et un dossier mobile monté en mobile rotation sur le dossier fixe. Lorsque le dossier mobile est rabattu sur l'assise, l'espace situé au-dessus du dossier mobile forme un espace de rangement de bagages. Bien que donnant globalement satisfaction, l'espace de rangement ainsi obtenu présente un faible volume de rangement.

C'est à ces inconvénients qu'entend plus particulièrement remédier l'invention en proposant un nouvel aménagement pour véhicule de transport permettant de convertir simplement un espace dédié au transport de passagers en un espace dédié au stockage de bagages présentant un volume de stockage important.

À cet effet, l'invention concerne un aménagement pour véhicule de transport, notamment ferroviaire, convertible entre une configuration espace passagers et une configuration espace bagages. Selon l'invention en configuration espace passagers, l'aménagement présente au moins un siège, chaque siège comprenant une assise horizontale et un dossier, qui définit une première face d'appui dorsal pour un passager, et une table disposée en regard de chaque siège, cette table comprenant au moins un plateau. De plus, en configuration espace bagages, l'aménagement présente une surface plane de rangement, délimitant un espace de rangement pour bagages, une face supérieure du plateau de la table et une deuxième face du dossier, opposée à la première face, formant ensemble la surface plane de rangement. En outre, chaque dossier est mobile entre une première position utilisée en configuration espace passagers, où sa première face est exposée et orientée vers la table, et une deuxième position utilisée en configuration espace bagages, où sa deuxième face est exposée et orientée vers le haut. Enfin, la table est mobile entre une position haute utilisée en configuration espace passagers, où le plateau est au-dessus de l'assise de chaque siège, et une position basse utilisée en configuration espace bagages, où la face supérieure de son plateau est affleurante à la deuxième face du dossier.

Grâce à l'invention, il est possible de prévoir un aménagement modulaire dans un véhicule de transport permettant, selon les besoins, de transformer facilement des banquettes destinées aux passagers en un grand espace de stockage pour bagages, et inversement, en déplaçant les dossiers des banquettes et la table, respectivement entre leurs première et deuxième positions.

Selon des aspects avantageux, mais non obligatoires de l'invention, un tel aménagement peut incorporer une ou plusieurs des caractéristiques suivantes, prises selon toutes combinaisons techniquement admissibles :
- En configuration espace passagers, l'aménagement présente au moins deux sièges en vis-à-vis, la table étant disposée entre lesdits au moins deux sièges.
- L'aménagement présente au moins une cloison verticale, et, en configuration espace passagers, chaque dossier est appuyé contre la ou l'une des cloisons verticales, et en configuration espace bagages chaque cloison verticale délimite avec la surface plane de rangement ledit espace de rangement pour bagages.
- L'assise et la première face d'appui dorsal du dossier sont revêtues d'un matériau souple et la deuxième face du dossier et la face supérieure du plateau de la table sont revêtues d'un matériau dur, plus rigide que le matériau de l'assise et de la première face.
- Le matériau de revêtement de l'assise et de la première face du dossier est du cuir ou du tissu et le matériau de revêtement de la deuxième face du dossier et la face supérieure du plateau de la table est un alliage d'aluminium.
- En configuration espace bagages, l'assise et la première face d'appui dorsal du dossier sont disposées en vis-à-vis l'une de l'autre et protégées par la surface plane de rangement.
- L'aménagement comprend un support de maintien de la table lorsque l'aménagement est en configuration espace bagages, le support étant alors disposé sous le plateau de la table et supportant le poids des bagages placés sur le plateau.

Selon un autre aspect, l'invention concerne aussi une méthode de conversion d'un aménagement tel que mentionné ci-dessus entre sa configuration espace passagers et sa configuration espace bagages, qui comporte au moins les étapes suivantes :
- translation parallèle à un axe vertical et vers le bas du plateau de la table ; et
- rotation de 90° autour d'un axe charnière parallèle à un axe transversal du dossier de chaque siège entre une position verticale et une position horizontale.

L'invention concerne aussi une méthode de conversion d'un aménagement tel que mentionné ci-dessus entre sa configuration espace bagages et sa configuration espace passagers, qui comporte au moins les étapes suivantes :
- translation parallèle à un axe vertical Z et vers le haut du plateau de la table ; et
- rotation de 90° autour d'un axe charnière parallèle à un axe transversal du dossier de chaque siège entre une position horizontale et une position verticale.

Ces méthodes induisent les mêmes avantages que ceux mentionnés ci-dessus au sujet de l'aménagement de l'invention.

L'invention concerne aussi un véhicule de transport, notamment ferroviaire, comprenant un aménagement tel que mentionné ci-dessus.

L'invention sera mieux comprise et d'autres avantages de celle-ci apparaitront plus clairement à la lumière de la description qui va suivre, d'un mode de réalisation d'un aménagement pour véhicule de transport, de méthodes de conversion d'un tel aménagement et d'un véhicule de transport, conformes à l'invention, donnée uniquement à titre d'exemple et faite en référence aux dessins annexés dans lesquels :
[Fig. 1] la figure 1 est une vue de dessus d'une voiture de véhicule de transport conforme à l'invention et comportant deux aménagements conforme à l'invention ;
[Fig. 2] la figure 2 est une vue en perspective d'un aménagement conforme à l'invention en configuration espace passagers ; et
[Fig. 3] la figure 3 est une vue en perspective identique à la figure 2 de l'aménagement conforme à l'invention en configuration espace bagages.

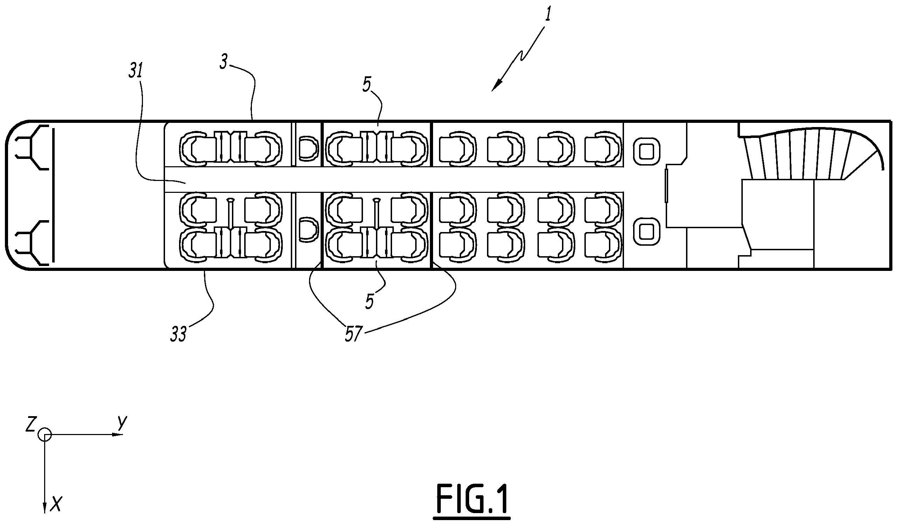

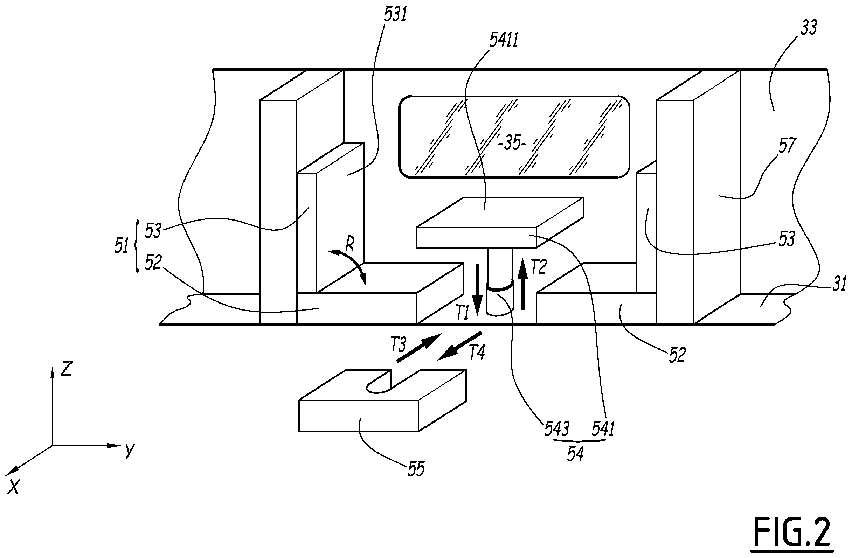

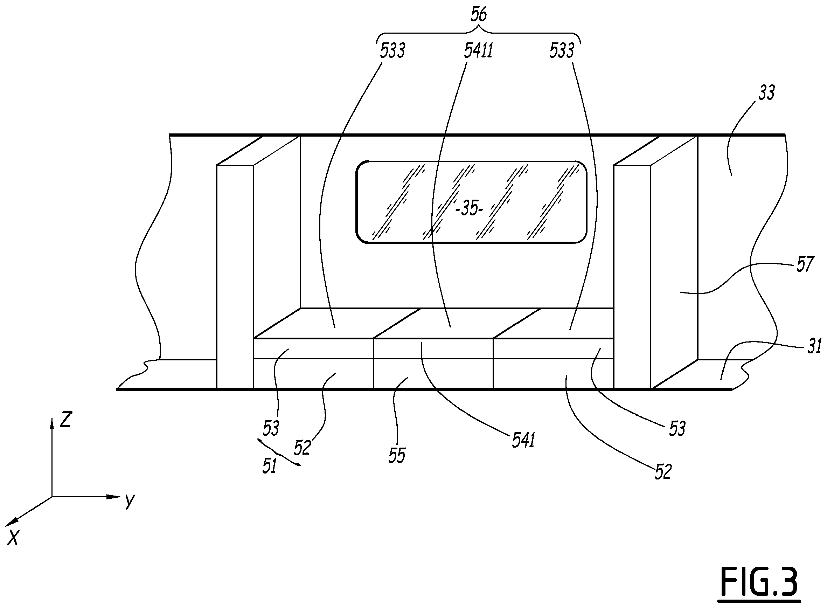

Un véhicule de transport 1, dans l'exemple un train, est partiellement représenté schématiquement en vue de dessus sur la figure 1. Ce train comporte une voiture 3 qui définit un espace intérieur délimité par un plancher 31, des parois 33 donnant sur l'extérieur et un plafond non-représenté. Les parois 33 sont équipées de fenêtres, dont une est visible aux figures 2 et 3, avec la référence 35.

En variante non représentée, le véhicule de transport 1 peut être composé de plusieurs voitures 3. En variante non représentée, le véhicule de transport 1 peut être un tramway, ou bien un véhicule routier, tel qu'un autocar, un véhicule de transport aérien, tel qu'un avion, voire encore un véhicule de transport maritime, tel qu'un paquebot.

On définit un axe X, un axe Y et un axe Z comme étant respectivement un axe transversal, un axe longitudinal et un axe vertical de la voiture 3.

La voiture 3 comporte deux aménagements 5 conformes à l'invention, chaque aménagement étant convertible entre un espace passagers et un espace bagages. Les aménagements 5 sont représentés en configuration espace passagers sur la figure 1.

Un aménagement 5 conforme à l'invention est représenté à la figure 2 en configuration espace passagers.

L'aménagement 5 comprend deux sièges 51, tels que des banquettes, formé chacun d'une assise horizontale 52 et d'un dossier 53. Les deux sièges sont disposés en vis-à-vis. Dans l'exemple de la figure 2, chaque siège est par exemple une banquette et permet à deux passagers de s'y installer. En variante, les sièges ou les banquettes peuvent permettre à un nombre différent de passagers de s'y installer, par exemple un passager, comme représenté sur l'un des deux aménagements de la figure 1, ou trois passagers.

En variante non-représentée de l'invention, chaque passager bénéficie d'un siège individuel et les sièges juxtaposés selon l'axe transversal X forment ensemble une banquette 51.

Le dossier 53 est vertical en configuration espace passagers et définit une première face d'appui dorsal 531 pour un passager et une deuxième face 533, opposée à la première face.

Dans l'exemple, la face d'appui dorsale 531 du dossier 53 est représentée plane et verticale, pour simplifier la description et les figures. En pratique, cette face d'appui dorsale présente un galbe et une inclinaison adaptés à la morphologie des passagers afin de proposer une assise confortable.

L'aménagement 5 comprend également une table 54 disposée entre les deux sièges/banquettes 51 le long de l'axe Y. La table 54 est donc en regard de chaque siège/banquette. La table 54 comprend un plateau 541 et avantageusement un pied 543 reliant le plateau au sol 31 de la voiture. Le plateau 541 définit une face supérieure 5411. Les passagers occupant les banquettes 51 peuvent utiliser ce plateau à leur convenance, par exemple pour y déposer des objets. Dans l'exemple, le pied 543 est un pied télescopique, réglable en hauteur selon l'axe Z. Le réglage de ce pied définit une position haute et une position basse de la table 54 et du plateau 541. En configuration espace passagers, la table 54 est en position haute.

L'aménagement 5 comprend également un support de maintien 55, qui n'est pas utilisé en configuration espace passagers. Dans cette configuration, le support de maintien 55 est, par exemple, stocké dans un local de rangement ou dans un coffre, non-représentés, du véhicule 1

L'aménagement 5 est encadré par deux cloisons verticales 57, qui sont perpendiculaires à la paroi 33 de la voiture 3 et à l'axe longitudinal Y.

En configuration espace passagers, la deuxième face 533 de chaque dossiers 53 est appuyée contre une cloison 57.

En configuration espace passagers représentée à la figure 2, l'aménagement 5 propose des fonctionnalités comparables aux aménagements connus permettant l'installation de passagers dans un véhicule de transport.

L'aménagement 5 est représenté à la figure 3 en configuration espace bagages.

Dans cette configuration, le dossier 53 de chaque siège/banquette 51 est horizontal et la face d'appui dorsal 531 est en vis-à-vis de/contre l'assise 52 de sa banquette. Ainsi, la deuxième face 533 du dossier est horizontale et orientée vers le haut.

De plus, dans cette configuration espace bagages, la table est en position basse. Le pied télescopique est par exemple réglé pour que la table 54 soit en position basse. Dans cette position, la face supérieure 5411 du plateau 541 de la table est horizontale et affleurante à la deuxième face 533 du dossier 53 de chaque banquette.

Par « affleurante », on entend que les hauteurs des faces 5411 et 533, mesurées parallèlement à l'axe Z par rapport au plancher 31, sont identiques à 5% près, de préférence à 2% près.

La face supérieure 5411 du plateau de la table et la deuxième face 533 du dossier de chaque banquette forment ensemble une surface plane de rangement 56. La surface plane de rangement 56 et les cloisons verticales 57 délimitent un espace de rangement pour des bagages non représentés.

Les cloisons verticales 57 permettent à la structure de l'aménagement d'avoir une bonne résistance mécanique. Elles permettent également de protéger les passagers en cas de freinage d'urgence, en bloquant des bagages qui seraient projetés par une décélération brutale, depuis l'espace de rangement vers des passagers assis à proximité.

En configuration espace bagages, les passagers du véhicule 1 peuvent stocker des bagages, par exemple des valises, en quantité importante dans l'espace de rangement ainsi défini.

En configuration espace bagages, le support 55 est installé entre le plancher 31 et le plateau 541 de la table, permettant au plateau de reposer sur le support. Ainsi, le poids des bagages placés sur le plateau 541 est transmis au plancher 31 de la voiture 3 par l'intermédiaire du support 55, ce qui a pour effet de soulager le pied 543 ou en variante la structure de fixation de la table à la caisse de véhicule. Le pied 543 ou en variante la structure de fixation de la table à la caisse de véhicule peut alors être dimensionné pour supporter une charge modérée liée à l'utilisation du plateau en configuration espace passagers, sans avoir à être surdimensionné pour supporter les charges lourdes des bagages stockés dans l'espace de rangement.

En variante non-représentée de l'invention, le pied 543 ou selon une autre variante la structure de fixation de la table à la caisse de véhicule est dimensionné pour supporter le poids des bagages stockés dans l'espace de rangement et le support 55 n'est pas utilisé. C'est pourquoi, le support 55 est optionnel.

L'assise 52 et la première face d'appui dorsal 531 du dossier 53 de la banquette 51 sont rembourrées avec de la mousse et revêtues d'un matériau souple. Ce matériau permet aux passagers de s'installer confortablement sur la banquette 51. Par exemple, ce matériau est du tissu ou du cuir recouvrant un rembourrage en mousse.

La deuxième face 533 du dossier de la banquette et la face supérieure 5411 du plateau de la table sont revêtues d'un matériau dur, plus rigide que le matériau de l'assise et de la première face. Par exemple, ce matériau est un alliage d'aluminium. Ce matériau est configuré pour résister aux charges lourdes des bagages stockés dans l'espace de rangement et pour résister aux impacts et frottements générés par la manipulation de ces bagages.

De préférence, le support 55 et les cloisons 57 sont fabriqués dans le même matériau que la deuxième face 533 du dossier et la face supérieure 5411 du plateau de la table, par exemple en alliage d'aluminium.

L'assise 52 et la première face d'appui dorsal 531 étant disposées en vis-à-vis, c'est-à-dire l'une contre l'autre, en configuration espace bagages et protégées par la surface plane de rangement 56, le revêtement souple, qui les recouvre, est protégé des impacts et frottements générés par la manipulation des bagages.

La géométrie du support 55 est configurée pour permettre son installation sous le plateau de la table par un mouvement de translation T3 parallèle à l'axe X et dirigé vers la paroi 33. Dans l'exemple, le support a une section en forme de U selon le plan formé par les axes X et Y, les deux pattes du U passant de chaque côté du pied 543 sans interférer avec lui lors de cette translation.

Un opérateur du véhicule 1 peut convertir l'aménagement 5 depuis la configuration espace passagers vers la configuration espace bagages en réalisant les étapes suivantes :
- translation T1 parallèle à l'axe vertical Z et vers le bas du plateau 541 de la table 54, par exemple par réglage du pied 543, depuis la position haute vers la position basse du plateau ;
- rotation R de 90° autour d'un axe charnière parallèle à l'axe transversal X du dossier 53 de chaque banquette/siège 51 entre une position verticale, où la deuxième face 533 est appuyée contre la cloison 57, et une position horizontale, où la première face d'appui dorsal 531 est en vis-à-vis de, ou en appui contre, l'assise 52 ; et
- positionnement du support de maintien 55 sous le plateau de la table par une translation T3 parallèle à l'axe transversal X et dirigée vers la paroi 33.

Le support 55 peut être positionné sous le plateau de la table à tout moment de cette conversion.

Un opérateur du véhicule 1 peut convertir l'aménagement 5 depuis la configuration espace bagages vers la configuration espace passagers en réalisant les étapes suivantes :
- translation T2 parallèle à l'axe vertical Z et vers le haut du plateau 541 de la table 54, par exemple par réglage du pied 543, depuis la position basse vers la position haute du plateau ;
- rotation R de 90° autour d'un axe charnière parallèle à l'axe transversal X du dossier 53 de chaque banquette/siège 51 entre une position horizontale, où la première face d'appui dorsal est en vis-à-vis de ou en appui contre l'assise 52, et une position verticale, où la deuxième face est appuyée contre la cloison 57 ; et
- dégagement du support de maintien 55 de sous le plateau de la table par une translation T4 parallèle à l'axe transversal X et s'éloignant de la paroi 33.

Le support 55 peut être dégagé de sous le plateau de la table à tout moment de cette conversion.

L'axe charnière servant d'axe de rotation pour la rotation R du dossier 53 peut, par exemple, être un axe mécanique, c'est-à-dire une jointure non-représentée reliant le dossier 53 à l'assise 52. Cette jointure peut être une charnière de type « charnière-piano », ou formée par des gonds. En variante non-représentée, le dossier est d'abord détaché de la banquette, puis tourné jusqu'à présenter la face d'appui dorsal en vis-à-vis de l'assise 52, et enfin rattaché à la banquette. Dans cette variante, l'axe de la rotation R n'est pas défini par une structure mécanique.

En variante non-représentée de l'invention, l'aménagement 5 comporte un seul siège 51, disposé en regard de la table 54. Dans une telle variante, la table 54 est par exemple disposée, selon l'axe longitudinal Y, entre le siège 51 et une cloison 57, cette cloison pouvant être disposée contre la table 54 ou à distance de la table.

En variante non-représentée de l'invention, le dossier 53 de la banquette 51 intègre un ou plusieurs accoudoirs pivotant entre une position rangée, dans laquelle l'accoudoir est affleurant à la face d'appui dorsal 531, et une position sortie, dans laquelle l'accoudoir s'étend depuis la face d'appui dorsal 531 selon un axe perpendiculaire à cette face.

En variante non-représentée de l'invention, la table 54 comprend plusieurs pieds 543, chaque pied étant réglable entre une position haute et une position basse.

En variante non-représentée de l'invention, la table 54 est réglable en hauteur à l'aide d'un système de pantographe remplaçant le pied télescopique 543.

En variante non-représentée de l'invention, le support 55 a une forme différente d'un U, cette forme étant adaptée pour permettre le positionnement du support entre le plateau 541 de la table 54 et le plancher 31 de la voiture 3, sans interférer avec le ou les pieds de la table.

En variante non-représentée de l'invention, l'aménagement 5 ne comporte pas de cloison 57. En configuration espace passagers, le dossier 53 de la banquette 51 fait alors office de cloison, et en configuration espace bagages, la surface de rangement 56 a pour seule limite latérale la paroi 33 de la voiture 3.

En variante non-représentée de l'invention, l'aménagement 5 dispose d'organes de verrouillage permettant de verrouiller l'aménagement en configuration espace bagages et en configuration espace passagers. Par exemple, ces organes de verrouillage peuvent être des loquets à tirette ou des goupilles permettant de bloquer la rotation du dossier 53 et le réglage du pied 543. De préférence, ces organes de verrouillage sont chargés élastiquement par des moyens élastiques, tels que des ressorts, vers une position où ils bloquent par défaut le pivotement des dossiers 53 et la translation du plateau 541 de la table 54.

En variante non-représentée de l'invention, le véhicule de transport 1 comporte un ou plusieurs wagons destinés au transport de fret. Ce wagon comporte un ou plusieurs aménagements conformes à l'invention pouvant être convertis entre une configuration espace passagers, pouvant servir d'assise temporaire au personnel travaillant dans le wagon ou à du personnel de l'opérateur du véhicule, et une configuration espace bagages, pouvant servir au transport de fret.

L'étendue de la protection est déterminé par les revendications annexées.

## Revendications

1. Aménagement (5) pour véhicule (1) de transport, notamment ferroviaire, convertible entre une configuration espace passagers et une configuration espace bagages, tel que :
- en configuration espace passagers, l'aménagement (5) présente au moins un siège (51), chaque siège comprenant une assise horizontale (52) et un dossier (53), qui définit une première face d'appui dorsal (531) pour un passager, et une table (54) disposée en regard de chaque siège, cette table comprenant au moins un plateau (541) ;
- en configuration espace bagages, l'aménagement (5) présente une surface plane de rangement (56), délimitant un espace de rangement pour bagages, une face supérieure (5411) du plateau de la table et une deuxième face (533) du dossier, opposée à la première face (531), formant ensemble la surface plane de rangement (56) ;
- chaque dossier (53) est mobile entre une première position utilisée en configuration espace passagers, où sa première face (531) est exposée et orientée vers la table, et une deuxième position utilisée en configuration espace bagages, où sa deuxième face (533) est exposée et orientée vers le haut ; et
- la table (54) est mobile entre une position haute utilisée en configuration espace passagers, où le plateau est au-dessus de l'assise de chaque siège, et une position basse utilisée en configuration espace bagages, où la face supérieure de son plateau est affleurante à la deuxième face du dossier.

2. Aménagement (5) selon la revendication 1, **caractérisé en ce que**, en configuration espace passagers, l'aménagement (5) présente au moins deux sièges (51) en vis-à-vis, la table (54) étant disposée entre lesdits au moins deux sièges.

3. Aménagement (5) selon la revendication 1 ou 2, **caractérisé en ce que** l'aménagement (5) présente au moins une cloison verticale (57), et **en ce que**, en configuration espace passagers, chaque dossier (53) est appuyé contre la ou l'une des cloisons verticales (57), et en configuration espace bagages chaque cloison verticale délimite avec la surface plane de rangement (56) ledit espace de rangement pour bagages.

4. Aménagement (5) selon l'une quelconque des revendications précédentes, **caractérisé en ce que** :
- l'assise (52) et la première face d'appui dorsal (531) du dossier (53) sont revêtues d'un matériau souple; et
- la deuxième face (533) du dossier et la face supérieure (5411) du plateau (541) de la table (54) sont revêtues d'un matériau dur, plus rigide que le matériau de l'assise et de la première face.

5. Aménagement (5) selon l'une quelconque des revendications précédentes, **caractérisé en ce que** :
- le matériau de revêtement de l'assise (52) et de la première face (531) du dossier (53) est du cuir ou du tissu ; et
- le matériau de revêtement de la deuxième face (533) du dossier et de la face supérieure (5411) du plateau (541) de la table (54) est un alliage d'aluminium.

6. Aménagement (5) selon l'une quelconque des revendications précédentes, **caractérisé en ce que**, en configuration espace bagages, l'assise (52) et la première face d'appui dorsal (531) du dossier (53) sont disposées en vis-à-vis l'une de l'autre et protégées par la surface plane de rangement (56).

7. Aménagement (5) selon l'une quelconque des revendications précédentes, **caractérisé en ce qu'**il comprend un support (55) de maintien de la table (54) lorsque l'aménagement est en configuration espace bagages, le support étant alors disposé sous le plateau (541) de la table et supportant le poids des bagages placés sur le plateau.

8. Méthode de conversion d'un aménagement (5) selon l'une des revendications précédentes entre sa configuration espace passagers et sa configuration espace bagages, la méthode comprenant au moins les étapes suivantes :
a) translation (T1) parallèle à un axe vertical Z et vers le bas du plateau (541) de la table (54) ; et
b) rotation (R) de 90° autour d'un axe charnière parallèle à un axe transversal X du dossier (53) de chaque siège (51) entre une position verticale et une position horizontale.

9. Méthode de conversion d'un aménagement (5) selon l'une des revendications précédentes entre sa configuration espace bagages et sa configuration espace passagers, **caractérisée en ce qu'**elle comprend au moins les étapes suivantes :
c) translation (T2) parallèle à l'axe vertical Z et vers le haut du plateau (541) de la table (54) ; et
d) rotation (R) de 90° autour d'un axe charnière parallèle à l'axe transversal X du dossier (53) de chaque siège (51) entre une position horizontale et une position verticale.

10. Véhicule de transport (1), notamment ferroviaire, comprenant un aménagement selon l'une des revendications 1 à 7.

## Patentansprüche

1. Ausstattung (5) für ein Transportfahrzeug (1), insbesondere Schienenfahrzeug, die zwischen einer Fahrgastraumkonfiguration und einer Gepäckraumkonfiguration umwandelbar ist, so dass:
- die Ausstattung (5) in der Fahrgastraumkonfiguration mindestens einen Sitz (51) aufweist, wobei jeder Sitz eine horizontale Sitzfläche (52) und eine Rückenlehne (53) umfasst, die eine erste Rückenstützfläche (531) für einen Fahrgast definiert, und einen Tisch (54), der jedem Sitz zugewandt angeordnet ist, wobei dieser Tisch mindestens eine Platte (541) umfasst;
- die Ausstattung (5) in der Gepäckraumkonfiguration eine ebene Ablagefläche (56) aufweist, die einen Gepäckstauraum begrenzt, wobei eine obere Fläche (5411) der Tischplatte und eine zweite Fläche (533) der Rückenlehne, die der ersten Fläche (531) gegenüberliegt, zusammen die ebene Ablagefläche (56) bilden;
- jede Rückenlehne (53) zwischen einer ersten Position, die in der Fahrgastraumkonfiguration verwendet wird, in der ihre erste Fläche (531) freiliegt und zum Tisch ausgerichtet ist, und einer zweiten Position, die in der Gepäckraumkonfiguration verwendet wird, in der ihre zweite Fläche (533) freiliegt und nach oben ausgerichtet ist, beweglich ist; und
- der Tisch (54) zwischen einer in der Fahrgastraumkonfiguration verwendeten oberen Position, in der sich die Tischplatte über der Sitzfläche jedes Sitzes befindet, und einer in der Gepäckraumkonfiguration verwendeten unteren Position, in der die obere Fläche seiner Platte mit der zweiten Fläche der Rückenlehne bündig ist, beweglich ist.

2. Ausstattung (5) nach Anspruch 1, **dadurch gekennzeichnet, dass** die Ausstattung (5) in der Fahrgastraumkonfiguration mindestens zwei einander gegenüberliegende Sitze (51) aufweist, wobei der Tisch (54) zwischen den mindestens zwei Sitzen angeordnet ist.

3. Ausstattung (5) nach Anspruch 1 oder 2, **dadurch gekennzeichnet, dass** die Ausstattung (5) mindestens eine vertikale Trennwand (57) aufweist, und dass in der Fahrgastraumkonfiguration jede Rückenlehne (53) an der oder einer der vertikalen Trennwände (57) anliegt und in der Gepäckraumkonfiguration jede vertikale Trennwand mit der ebenen Ablagefläche (56) den Gepäckstauraum begrenzt.

4. Ausstattung (5) nach einem der vorhergehenden Ansprüche, **dadurch gekennzeichnet, dass**:
- die Sitzfläche (52) und die erste Rückenstützfläche (531) der Rückenlehne (53) mit einem elastischen Material bezogen sind; und
- die zweite Fläche (533) der Rückenlehne und die obere Fläche (5411) der Platte (541) des Tisches (54) mit einem harten Material bezogen sind, das steifer als das Material der Sitzfläche und der ersten Seite ist.

5. Ausstattung (5) nach einem der vorhergehenden Ansprüche, **dadurch gekennzeichnet, dass**:
- das Bezugsmaterial der Sitzfläche (52) und der ersten Fläche (531) der Rückenlehne (53) Leder oder Stoff ist; und
- das Bezugsmaterial der zweiten Fläche (533) der Rückenlehne und der oberen Fläche (5411) der Platte (541) des Tisches (54) eine Aluminiumlegierung ist.

6. Ausstattung (5) nach einem der vorhergehenden Ansprüche, **dadurch gekennzeichnet, dass** in der Gepäckraumkonfiguration die Sitzfläche (52) und die erste Rückenstützfläche (531) der Rückenlehne (53) einander gegenüberliegend angeordnet und durch die ebene Ablagefläche (56) geschützt sind.

7. Ausstattung (5) nach einem der vorhergehenden Ansprüche, **dadurch gekennzeichnet, dass** sie einen Träger (55) zum Halten des Tisches (54) umfasst, wenn sich die Ausstattung in der Gepäckraumkonfiguration befindet, wobei der Träger dann unter der Platte (541) des Tisches angeordnet ist und das Gewicht des auf der Platte platzierten Gepäcks trägt.

8. Verfahren zum Umwandeln einer Ausstattung (5) nach einem der vorhergehenden Ansprüche zwischen ihrer Fahrgastraumkonfiguration und ihrer Gepäckraumkonfiguration, wobei das Verfahren mindestens die folgenden Schritte umfasst:
a) Translation (T1) parallel zu einer vertikalen Achse Z und nach unten der Platte (541) des Tisches (54); und
b) Drehen (R) um 90° um eine Scharnierachse parallel zu einer Querachse X der Rückenlehne (53) jedes Sitzes (51) zwischen einer vertikalen Position und einer horizontalen Position.

9. Verfahren zur Umwandlung einer Ausstattung (5) nach einem der vorhergehenden Ansprüche zwischen ihrer Gepäckraumkonfiguration und ihrer Fahrgastraumkonfiguration, **dadurch gekennzeichnet, dass** es mindestens die folgenden Schritte umfasst:
c) Translation (T2) parallel zur vertikalen Achse Z und nach oben der Platte (541) des Tisches (54); und
d) Drehen (R) um 90° um eine Scharnierachse parallel zur Querachse X der Rückenlehne (53) jedes Sitzes (51) zwischen einer horizontalen Position und einer vertikalen Position.

10. Transportfahrzeug (1), insbesondere Schienenfahrzeug, das mindestens eine Ausstattung nach einem der Ansprüche 1 bis 7 umfasst.

## Claims

1. Arrangement (5) for a transport vehicle (1), in particular a railway vehicle, convertible between a passenger space configuration and a luggage space configuration, such as:
- in passenger space configuration, the arrangement (5) has at least one seat (51), each seat comprising a horizontal seat cushion (52) and a backrest (53), which defines a first back support surface (531) for a passenger, and a table (54) arranged opposite each seat, this table comprising at least one tray (541);
- in the luggage space configuration, the arrangement (5) has a flat storage surface (56), delimiting a luggage storage space, an upper face (5411) of the table top and a second face (533) of the backrest, opposite the first face (531), together forming the flat storage surface (56);
- each backrest (53) is movable between a first position used in the passenger space configuration, where its first face (531) is exposed and oriented towards the table, and a second position used in the luggage space configuration, where its second face (533) is exposed and oriented upwards; and
- the table (54) is movable between a high position used in the passenger space configuration, where the table top is above the seat of each seat, and a low position used in the luggage space configuration, where the upper face of its table top is flush with the second face of the backrest.

2. Arrangement (5) according to claim 1, **characterised in that**, in passenger space configuration, the arrangement (5) has at least two seats (51) facing each other, the table (54) being arranged between the said at least two seats.

3. Arrangement (5) according to claim 1 or 2, **characterised in that** the arrangement (5) has at least one vertical partition (57), and **in that**, in passenger space configuration, each backrest (53) is supported against the or one of the vertical partitions (57), and in the luggage space configuration each vertical partition delimits the said luggage storage space with the flat storage surface (56).

4. Arrangement (5) according to any of the preceding claims, **characterised in that**:
- the seat (52) and the first back support surface (531) of the backrest (53) are covered with a flexible material; and
- the second side (533) of the backrest and the upper side (5411) of the top (541) of the table (54) are covered with a hard material which is more rigid than the material of the seat and the first side.

5. Arrangement (5) according to any of the preceding claims, **characterised in that**:
- the material covering the seat (52) and the first face (531) of the backrest (53) is leather or fabric; and
- the covering material of the second face (533) of the backrest and of the upper face (5411) of the top (541) of the table (54) is an aluminium alloy.

6. Arrangement (5) according to any of the preceding claims, **characterised in that**, in the luggage space configuration, the seat (52) and the first dorsal support face (531) of the backrest (53) are arranged opposite one another and protected by the flat storage surface (56).

7. Arrangement (5) according to any of the preceding claims, **characterised in that** it comprises a support (55) for holding the table (54) when the fitting is in the luggage space configuration, the support then being disposed under the table top (541) and supporting the weight of the luggage placed on the top.

8. Method of converting an arrangement (5) according to any of the preceding claims between its passenger space configuration and its luggage space configuration, the method comprising at least the following steps:
a) translation movement (T1) parallel to a vertical axis Z and downwards of the plate (541) of the table (54); and
b) rotation (R) through 90° about a hinge axis parallel to a transverse axis X of the backrest (53) of each seat (51) between a vertical position and a horizontal position.

9. Method of converting an arrangement (5) according to one of the preceding claims between its luggage space configuration and its passenger space configuration, **characterised in that** it comprises at least the following steps:
c) translation (T2) parallel to the vertical axis Z and upwards of the plate (541) of the table (54); and
d) rotation (R) through 90° about a hinge axis parallel to the transverse axis X of the backrest (53) of each seat (51) between a horizontal position and a vertical position.

10. Transport vehicle (1), particularly a railway vehicle, comprising at least one arrangement according to one of the claims 1 to 7.
